# FASCICULE DE BREVET EUROPEEN

(11) **EP 3 347 140 B1**
(45) Date de publication et mention de la délivrance du brevet: **31.07.2024**
(21) Numéro de dépôt: 16777714.3
(22) Date de dépôt: 07.09.2016
(51) Int. Cl.: B05D 3/12, B05D 7/14, B05D 1/18, B05D 3/00, B05D 7/18

(54) **PROCÉDÉ D'APPLICATION D'UN REVÊTEMENT ANTICORROSION SUR UNE PIÈCE MÉTALLIQUE, COMPOSITION DE REVÊTEMENT AQUEUX, REVÊTEMENT ANTICORROSION DE PIÈCES MÉTALLIQUES ET PIÈCE MÉTALLIQUE REVÊTUE**
VERFAHREN ZUM AUFBRINGEN EINER KORROSIONSBESTÄNDIGEN BESCHICHTUNG AUF EIN METALLTEIL, WÄSSRIGE BESCHICHTUNGSZUSAMMENSETZUNG, KORROSIONSBESTÄNDIGE BESCHICHTUNG FÜR METALLTEILE UND BESCHICHTETES METALLTEIL
METHOD FOR APPLYING A CORROSION-RESISTANT COATING TO A METAL PART, AQUEOUS COATING COMPOSITION, CORROSION-RESISTANT COATING FOR METAL PARTS AND COATED METAL PART

(30) Priorité: 07.09.2015 FR 1558281
(43) Date de publication de la demande: 18.07.2018
(73) Titulaire: NOF Metal Coatings Europe, 60100 Creil (FR)
(72) Inventeur: COZETTE, Florent, 60160 Montataire (FR); CARBON, Sébastien, 60600 Etouy (FR); LABOUCHE, Didier, 59230 Saint Amand Les Eaux (FR); FEVRIER, Carine, 60800 CREPY EN VALOIS (FR)
(74) Mandataire: AtlantIP International
(86) Numéro de dépôt international: PCT/FR2016/052225
(87) Numéro de publication internationale: WO 2017/042483

(56) Documents cités:
- WO-A1-2011/124759
- WO-A1-95/23824
- GB-A- 826 564
- JP-A- S58 189 268
- US-A- 4 465 562

## Description

La présente invention concerne un procédé d'application d'un revêtement anticorrosion sur une pièce métallique par immersion/émersion de la pièce dans un bain de peinture aqueux, permettant l'obtention de revêtement uniforme dont l'épaisseur moyenne déposée peut être ajustée.

Le brevet EP 808 883 décrit une composition de revêtement anticorrosion, dont le solvant principal est de l'eau, permettant l'obtention de revêtements anticorrosion présentant des propriétés satisfaisantes alors même que le revêtement ne comprend pas de chrome hexavalent. Ce revêtement peut être appliqué par différents procédés, en particulier par pulvérisation, trempage ou trempage-centrifugation.

Les techniques d'application au trempé sont intéressantes en ce sens qu'elles permettent un rendement proche de 100%. Une fois la pièce émergée, même si une quantité importante de peinture coule de la pièce, elle retombe dans le bain (la matière à déposer est recyclée).

Par ailleurs, ces techniques génèrent très peu d'émission de composés organiques volatils comparées, par exemple, aux techniques de pulvérisation.

Elles présentent le gros avantage de pouvoir traiter et protéger des corps creux, inaccessibles par d'autres techniques.

Les technologies existantes ne permettent cependant pas, en particulier pour des pièces volumineuses et de formes complexes, de déposer de manière uniforme, par des applications au trempé, l'épaisseur de film recherchée.

L'ajout dans le bain de peinture d'agents de rhéologie traditionnels tels que les gommes de xanthane, les épaississants cellulosiques traditionnels, les argiles organophiles, les additifs d'urée modifiée du type BYK^{®}420 ne permettent pas d'obtenir un revêtement uniforme à l'épaisseur recherchée (de 5 à 100 microns).

Il a été découvert, d'une manière surprenante, que l'addition de microfibrilles ou de nanofibrilles de cellulose (MNFC) dans le bain de peinture et l'application de vibrations à la pièce revêtue, après émersion du bain, permettent d'obtenir des revêtements uniformes dont l'épaisseur moyenne déposée peut être ajustée. L'utilisation d'agents de rhéologie traditionnels ne permet pas d'obtenir de tels résultats.

Les MNFC sont des matériaux issus de ressources renouvelables.

La cellulose est un polymère naturel. Il s'agit d'un polysaccharide de formule empirique (C₆H₁₀Oₛ), composé de chaînes linéaires de β (1,4) -D-glucose. Ces molécules de cellulose sont liées entre elles par des liaisons hydrogènes formant ainsi des microfibrilles.

Des fibres de cellulose, on peut extraire les MNFC, par transformation mécanique, mécano-enzymatique ou par voie chimique.

Les MNFC peuvent être obtenues à partir des fibres de cellulose par homogénéisation, puis défibrillation (traitement mécanique) : le traitement mécanique consiste à peler la fibre de cellulose pour créer des filaments. Différentes méthodes existent, par exemple : raffinage et homogénéisation à haute pression, cryocrushing, broyage. La production de microfibrilles de cellulose par la fibrillation de fibres de cellulose nécessite un traitement mécanique intense.

En fonction de l'origine des fibres et de la finesse que l'on souhaite obtenir, il est possible d'effectuer, avant le traitement mécanique, un pré-traitement. Le pré-traitement est essentiellement chimique ou enzymatique. Différents pré-traitements sont envisageables : pré-traitement alcalin, pré-traitement d'oxydation (TEMPO), pré-traitement enzymatique. Les microfibrilles ou nanofibrilles de cellulose (MNFC) fabriquées de cette manière sont constituées de parties amorphes et cristallines. Leurs caractéristiques sont les suivantes :
- Diamètre : de 10 à 100 nm, en particulier inférieur à 10 nm
- Longueur : jusqu'à 100 µm, en particulier de l'ordre de 1 000 nm

Les MNFC peuvent également être produites par voie chimique : c'est notamment le cas des MNFC issues des racines comestibles ou de leurs déchets (exemples : betteraves, carottes...). Elles peuvent par exemple se présenter sous forme de « plaquettes » de MNFC d'une dimension moyenne maximale d'au moins 10 microns et d'une dimension moyenne minimale inférieure à 1 micron comme décrit dans le brevet WO2013128196A1.

On notera que la demande de brevet WO 2011/124759 A1 divulgue, d'une part, une composition de revêtement aqueux qui comprend de l'eau, un liant et des microfibrilles ou nanofibrilles de cellulose (MNFC), et, d'autre part, un revêtement de pièces métalliques obtenu par l'utilisation d'une telle composition de revêtement aqueux.

L'invention a pour objet un procédé d'application d'un revêtement anticorrosion sur une pièce métallique par immersion/émersion de ladite pièce dans un bain de peinture aqueux, caractérisé en ce que le bain de peinture en phase aqueuse comprend de l'eau, un liant, et des MNFC et en ce que, en sortie du bain, la pièce métallique revêtue est soumise à des vibrations.

### Bain de peinture

Le bain de peinture comprend des MNFC.

Ces MNFC peuvent être issues d'un traitement mécanique ou d'un traitement mécano-enzymatique. Elles ont alors avantageusement une longueur inférieure à 100 µm , avantageusement de l'ordre de 1 000 nm. Leur diamètre est avantageusement inférieur à 100 nm.

Les MNFC ont avantageusement une longueur allant de 1 à 2 µm et un diamètre variant de 20 à 70 nm.

Ces MNFC peuvent également être issues d'une extraction chimique. Elles se présentent alors avantageusement sous la forme de plaquettes de MNFC, d'une dimension moyenne maximale d'au moins 10 microns et d'une dimension moyenne minimale inférieure à 1 micron comme décrit dans le brevet WO2013128196A1.

Ces MNFC sont disponibles dans le commerce.

Le bain de peinture aqueux comprend avantageusement de 0,2 à 8% en poids sec de MNFC, plus avantageusement de 0,5 à 4% en poids sec de MNFC, par rapport au poids total du bain.

Le bain comprend avantageusement de 3 à 50% en poids, par rapport au poids total du bain, de liant. Le liant est avantageusement choisi parmi les liants à base de silane, les liants à base de titanate, les liants à base de zirconate, les liants à base de silicate, les liants à base de résines phénoxy en phase aqueuse réticulées par exemple par une mélamine. Dans une variante de l'invention, le bain comprend avantageusement de 3 à 35% en poids, plus avantageusement 3 à 25% en poids, par rapport au poids total du bain, de liant. Le liant est alors avantageusement choisi parmi les liants à base de silane, les liants à base de titanate, les liants à base de zirconate, et leurs mélanges, en particulier deux à deux. En particulier, le liant peut être un mélange de silane et de titanate.

Le liant à base de silane comprend avantageusement un silane portant (1) au moins une fonction hydrolysable en fonction hydroxyle choisie parmi un radical alcoxy en C₁-C₄ et (2) un radical fonctionnalisé.

Le silane porte avantageusement au moins une fonction hydrolysable en fonction hydroxyle choisie parmi un radical alcoxy en C₁-C₄, de préférence en C₁-C₂. Le silane porte avantageusement trois fonctions hydrolysables en fonction hydroxyle, de préférence identiques. On entend par «fonction hydrolysable en fonction hydroxyle », toute fonction chimique susceptible de réagir avec l'eau pour se transformer en fonction hydroxyle -OH.

Le silane porte en outre un radical fonctionnalisé, avantageusement un radical comprenant une fonction époxy (oxirane), qui favorise la réticulation et l'adhésion au substrat.

Les silanes, dans les compositions de la présente invention, servent d'agents liants. Ils permettent également de stabiliser le bain de revêtement contre une réaction autogène nuisible. Le silane semble se lier et passiver le métal particulaire, si bien que la stabilité du bain de la composition de revêtement est améliorée. En outre, il permet d'améliorer l'adhésion du revêtement et sa résistance à la corrosion. Le silane représente avantageusement 3 à 20 % en poids du poids total du bain.

Le silane est avantageusement aisément dispersé dans le milieu aqueux et est, de préférence, soluble dans un tel milieu. Le silane utilisé est avantageusement un silane à fonction époxy choisi parmi le di- ou triméthoxysilane à fonction époxy et le di- ou triéthoxysilane à fonction époxy, ainsi que leurs mélanges, en particulier comme le bêta-(3,4-époxycyclohexyl)éthyl- triméthoxysilane, le 4-(triméthoxysilyl)butane-1,2-époxyde, le gamma-glycidoxypropyltriméthoxysilane ou le gamma glycidoxypropyltriéthoxysilane. Le silane utilisé peut également être avantageusement le tétraethoxysilane, l'octyltriethoxysilane, le phenyltriethoxysilane, le methyltriethoxysilane, le vinyltriethoxysilane, le 3-Aminopropyltriethoxysilane.

Le titanate organique peut être choisi dans le groupe constitué par les titanates organiques compatibles en phase organique et les titanates organiques compatibles en phase aqueuse.

Les titanates compatibles en phase organique sont avantageusement des tétraalkyle en C₁-C₈ titanates qui peuvent être représentés par la formule (I) suivante : 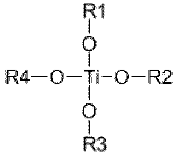 dans laquelle R1, R2, R3 et R4 représentent indépendamment un radical alkyle en C₁-C₈, éventuellement substitué. Le tétraalkyle en C₁-C₈ titanate est avantageusement choisi dans le groupe constitué par le tétraéthyltitanate (TET, Ti(OC₂Hₛ)₄), le tétra-n-butyltitanate (Tₙ,BT, Ti(OC₄H₉), le tetra-isopropoxytitanate et l'octylèneglycoltitanate (OGT, TI(0₂C₈H₁₇)₄).

Les titanates organiques compatibles en phase organique peuvent également être des titanates organiques sous forme chélatée non compatibles avec l'eau. Comme exemples de titanates organiques sous forme chélatée non compatibles avec l'eau (compatibles en phase organique), on peut notamment citer ceux commercialisés par Dorf Ketal sous le nom TYZOR^{®} AA (acétylacétonate titanium), TYZOR^{®} DC (diisopropoxy-biséthylacétoacétato titanate).

Les titanates compatibles en phase aqueuse sont avantageusement des titanates chélatés, qui peuvent être représentés par la formule générale (II) suivante : 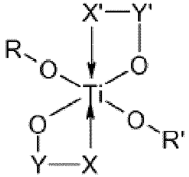 dans laquelle R et R' représentent indépendamment l'un de l'autre un radical alkyle en C₁-Ca, éventuellement substitué, X et X' représentent indépendamment un groupe fonctionnel comprenant un atome d'oxygène ou d'azote, et Y et Y' représentent indépendamment une chaîne hydrocarbonée ayant 1 à 4 atomes de carbone. X et X' représentent avantageusement un radical amino ou lactate.

Le titanate organique sous forme chélatée compatible en phase aqueuse est avantageusement choisi dans le groupe constitué par les triéthanolamines titanates (TYZOR^{©} TE et TEP commercialisés parDorf Ketal). Comme exemple de titanates organiques sous forme chélatée compatibles en phase aqueuse, on peut également citer ceux commercialisés par Dorf Ketal sous le nom TYZOR^{®} TA (alcanolamine titanate sous forme chélatée) et TYZOR^{®} LA (chélate de titanate et d'acide lactique).

Le zirconate organique peut être choisi dans le groupe constitué par les zirconates compatibles en phase organique et les zirconates compatibles en phase aqueuse.

Les zirconates organiques compatibles en phase organique sont avantageusement des tétraalkyle en C₁-C₁₀ zirconates, qui peuvent être représentés par la formule (I') suivante : 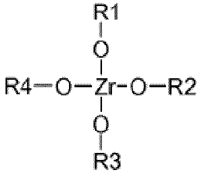 dans laquelle R1, R2, R3 et R4 représentent indépendamment un radical alkyle en C₁-C₁₀, éventuellement substitué. Le tétraalkyle en C1-C10 zirconate est avantageusement choisi dans le groupe constitué par le tétra-n-propyl zirconate et le tétra-n-butyl zirconate.

Les zirconates organiques compatibles en phase organique peuvent également être des zirconates organiques sous forme chélatée non compatibles avec l'eau. Comme exemple de zirconate organique sous forme chélatée non compatible avec l'eau (compatible en phase organique), on peut notamment citer celui commercialisé par Dorf Ketal sous le nom TYZOR^{®} ZEC (diéthylcitrate zirconate chélate).

Les zirconates organiques compatibles en phase aqueuse sont avantageusement des zirconates chélates qui peuvent être représentés par la formule générale (II') suivante : 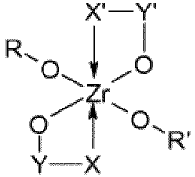 dans laquelle R et R' représentent indépendamment l'un de l'autre un radical alkyle en C₁-C₁₀, éventuellement substitué, X et X' représentent indépendamment un groupe fonctionnel comprenant un atome d'oxygène ou d'azote, et Y et Y' représentent indépendamment une chaîne hydrocarbonée ayant 1 à 4 atomes de carbone. X et X' représentent avantageusement un radical amino.

Le zirconate organique chelaté peut avantageusement être le triéthanolamine zirconate (TYZOR^{®} TEAZ commercialisé parDorf Ketal). Comme exemple de zirconate organique sous forme chélatée compatible en phase aqueuse, on peut également citer celui commercialisé par Dorf Ketal sous le nom TYZOR^{®} LAZ (chélate de zirconate et d'acide lactique).

Les liants silicate peuvent être des silicates de metal alcalin, des esters de silicates organiques tels que l'éthyle silicate (US 3, 469, 071), un sol de silice colloïdale, des ammonium silicates organiques (US 3,372,038). Les silicates sont avantageusement des silicate(s) de sodium et/ou de potassium et/ou de lithium. Des compositions aqueuses comprenant de tels silicates sont par exemple décrites dans la demande WO 03/078683.

Le bain comprend avantageusement 8 à 30% en poids de silicate(s) de sodium et/ou de potassium et/ou de lithium, plus avantageusement de 10 à 25% en poids, par rapport au poids total du bain.

Le bain peut être une solution aqueuse de silicate de sodium de composition pondérale suivante

| | |
|---|---|
| SiO₂ | 20 à 40 % en poids |
| Na₂O | 5 à 20 % en poids |
| eau | qsp 100 % en poids |

Cette solution de silicate de sodium peut également contenir une faible proportion de Na₂CO₃ de l'ordre de 0,1% en poids par rapport au poids de la solution de silicate.

Le bain peut être une solution aqueuse de silicate de potassium de composition pondérale suivante :

| | |
|---|---|
| SiO₂ | 15 à 35 % en poids |
| K₂O | 5 à 35 % en poids |
| eau | qsp 100% en poids |

Le bain peut être une solution aqueuse de silicate de lithium de composition pondérale suivante :

| | |
|---|---|
| SiO₂ | 15 à 40 % en poids |
| Li2O | 1 à 10 % en poids |
| eau | qsp 100% en poids |

Le liant peut également être un liant à base de résines phénoxy dispersées en phase aqueuse. Les résines phénoxy sont des polyhydroxyethers ayant des groupements alpha-glycol terminaux. Un greffage sur le squelette aliphatique de ces résines conduit à des dispersions anioniques stables en phase aqueuse. Les OH terminaux peuvent notamment réagir avec des mélamines. A titre d'exemples, on peut citer les résines phénoxy série PKHW commercialisées par la société Inchem corporation.

Le milieu liquide du bain de revêtement est pratiquement toujours de l'eau ou une combinaison d'eau et de solvant organique. D'autres solvants peuvent éventuellement être utilisés mais, de préférence, seulement en des quantités très faibles. De façon typique, le bain comprend 30 à 85 % en poids d'eau, par rapport au poids total du bain.

Le bain de revêtement peut également comprendre au moins un métal particulaire.

Le métal particulaire peut être choisi dans le groupe constitué par le zinc, l'aluminium, le chrome, le manganèse, le nickel, le titane, leurs alliages et mélanges intermétalliques, ainsi que leurs mélanges. Le métal particulaire est avantageusement choisi parmi le zinc et l'aluminium, ainsi que leurs alliages et leurs mélanges ou leurs alliages avec le manganèse, le magnésium, l'étain ou le Galfan^{®}.

Dans la pratique, il s'est avéré que la présence du zinc était hautement souhaitable. Le métal particulaire est avantageusement choisi parmi le zinc lamellaire et/ou l'aluminium lamellaire, et de préférence comprend du zinc lamellaire.
Lorsque le métal particulaire est un alliage ou un mélange de zinc et d'aluminium, l'aluminium peut éventuellement être présent en des quantités très faibles, par exemple 1 à 5 % en poids du métal particulaire, tout en fournissant néanmoins un revêtement d'aspect brillant. Habituellement, l'aluminium représente au moins 10 % en poids du métal particulaire, ainsi le rapport pondéral de l'aluminium au zinc est de l'ordre de 1:9. D'un autre côté, pour des raisons d'économie, l'aluminium ne représente pas plus d'environ 50 % en poids du zinc et de l'aluminium total, si bien que le rapport pondéral de l'aluminium au zinc peut atteindre 1:1. La teneur en métal particulaire de la composition de revêtement ne dépassera pas environ 40 % en poids du poids total de la composition pour maintenir le meilleur aspect de revêtement et représentera habituellement au moins 10 % en poids pour obtenir un aspect de revêtement brillant.

Le métal peut renfermer en quantité mineure un ou plusieurs solvants, par exemple du dipropylène-glycol et/ou du white spirit, notamment lorsque le métal a été préparé sous forme lamellaire. Les métaux particulaires renfermant du solvant sont habituellement utilisés sous la forme de pâtes, qui peuvent être utilisées directement avec d'autres ingrédients de la composition. Cependant, les métaux particulaires peuvent également être utilisés sous une forme sèche dans la composition de revêtement.

Le métal particulaire présent dans la composition est avantageusement sous forme de poudre lamellaire. Le métal particulaire a avantageusement une granulométrie inférieure à 100 um, encore plus avantageusement inférieure à 40 µm.

Le bain comprend avantageusement de 10 à 40% en poids, par rapport au poids total du bain, de métal particulaire, avantageusement sous forme lamellaire.

Dans cette variante de l'invention, le bain comprend avantageusement de 3 à 25% en poids, par rapport au poids total du bain, de liant. Le liant est avantageusement choisi parmi les liants à base de silane, les liants à base de titanate, les liants à base de zirconate, et leurs mélanges, en particulier deux à deux. En particulier, le liant peut être un liant silane/titanate. Les silane, titanate et zirconate sont tels que définis précédemment.

Le bain peut également comprendre un ou plusieurs des composés suivants :
a. 1 à 30% en poids de solvant organique ou d'un mélange de solvants organiques, par rapport au poids total de la composition

Selon une variante avantageuse de l'invention, le bain de revêtement comprend en outre 1 à 30% en poids de solvant organique ou d'un mélange de solvants organiques, par rapport au poids total du bain. Les solvants organiques sont avantageusement choisis dans le groupe constitué par les solvants glycoliques tels que les éthers de glycol, en particulier le diéthylène-glycol, le triéthylène-glycol et le dipropylène-glycol, les acétates, le propylène-glycol, le polypropylène-glycol, le nitropropane, les alcools, les cétones, l'éther méthylique de propylène glycol, l'isobutyrate de triméthyl-2,2,4 pentanediol (1,3) (texanol), le white spirit, le xylène ainsi que leurs mélanges.

Le dipropylène-glycol est particulièrement avantageux, notamment pour des raisons économiques et de protection de l'environnement. La quantité de solvants est avantageusement inférieure à 25 % en poids encore plus avantageusement inférieure à 16 % en poids, par rapport au poids total du bain. Lorsque les particules métalliques ont été préparées sous forme lamellaire dans un solvant, le métal particulaire résultant peut être sous la forme de pâte. Il peut alors constituer une partie du solvant organique du bain.
b. 0,1 à 7% en poids d'oxyde de molybdène, par rapport au poids total du bain

Selon une variante avantageuse de l'invention, le bain de revêtement comprend en outre 0,1 à 7% en poids d'oxyde de molybdène, par rapport au poids total du bain. La présence d'oxyde de molybdène MoO₃ permet d'améliorer le contrôle de la protection sacrificielle exercée par le métal particulaire. L'oxyde de molybdène MoO₃ est de préférence utilisé sous une forme cristalline orthorhombique essentiellement pure, présentant une teneur en molybdène supérieure à environ 60 % en masse. Avantageusement, l'oxyde de molybdène MoO₃ sera utilisé sous forme de particules de dimensions comprises entre 5 et 200 µm.
c. 0,5 à 10% en poids, par rapport au poids total du bain, d'un agent renforçateur des propriétés anti-corrosion choisi dans le groupe constitué par l'yttrium, le zirconium, le lanthane, le cérium, le praséodyme, sous la forme d'oxydes ou de sels, avantageusement l'oxyde d'yttrium Y203,

Selon une variante avantageuse de l'invention, le bain comprend en outre 0,5 à 10% en poids d'un agent renforçateur des propriétés anti-corrosion choisi dans le groupe constitué par l'yttrium, le zirconium, le lanthane, le cérium, le praséodyme, sous la forme d'oxydes ou de sels. Ledit agent renforçateur des propriétés anti-corrosion est avantageusement l'oxyde d'yttrium Y₂0₃ ou le chlorure de cérium. Ledit agent renforçateur des propriétés anti-corrosion peut avantageusement être associé à l'oxyde de molybdène précité, dans un rapport massique 0,25< agent renforçateur des propriétés anti-corrosion : MoO₃<20, avantageusement 0,5< agent renforçateur des propriétés anti-corrosion : MoO₃<16, encore plus avantageusement 0,5< agent renforçateur des propriétés anti-corrosion : MoO₃<14.
d. 0,2 à 4 % en poids, par rapport au poids total du bain, d'un pigment inhibiteur de corrosion tel que le triphosphate d'aluminium

Selon une variante avantageuse, le bain de revêtement comprend en outre un ou des pigments inhibiteurs de corrosion tels que le tri ou polyphosphate d'aluminium, les phosphates, les molybdates, les silicates et borates de zinc, de strontium, de calcium, de baryum et leurs mélanges, à des taux de l'ordre de 0,2 à 4% en poids, par rapport au poids total du bain de revêtement.
e. un silicate de sodium, de potassium ou de lithium, lorsque le liant n'est pas déjà un silicate
f. autres additifs.

Le bain de revêtement peut également comprendre d'autres additifs.

En particulier, le bain de revêtement peut également comprendre un agent mouillant, selon une teneur avantageusement inférieure à 4 % en poids, comprise entre 0,1 à 4% en poids, par rapport au poids total du bain.

Le bain peut également comprendre un modificateur de pH, généralement choisi parmi les oxydes et les hydroxydes de métaux alcalins, avantageusement le lithium et le sodium, les oxydes et les hydroxydes des métaux appartenant aux groupes IIA et IIB du tableau périodique, tels que les composés de strontium, calcium, baryum, magnésium et zinc. Le modificateur de pH peut également être un carbonate ou un nitrate des métaux précités.

Le bain selon l'invention peut également comprendre des phosphates, des substituants contenant du phosphore, tels que le ferrophosphate (pigment), des sels non organiques, en des quantités inférieures à 2 % en poids par rapport au poids du bain.

Le bain est avantageusement exempt de chrome VI. Le bain peut cependant renfermer du chrome sous une forme soluble ou non comme, par exemple, du chrome métallique ou du chrome au degré d'oxydation III.

### Vibrations :

Selon une caractéristique essentielle du procédé selon l'invention, en sortie de bain la pièce métallique revêtue est soumise à des vibrations.

L'utilisation des vibrations pour égoutter des pièces immergées dans une peinture est connue. Elle permet leur égouttage mais ne permet pas d'ajuster l'épaisseur déposée et d'obtenir un film de revêtement uniforme.

D'une manière surprenante, en association avec un bain tel que décrit précédemment, les vibrations permettent non seulement d'égoutter la pièce mais surtout d'ajuster l'épaisseur déposée et d'obtenir un film de revêtement uniforme. En particulier, la combinaison de MNFC dans un bain tel que décrit précédemment et de vibrations appliquées à une pièce émergeant de ce bain, permettent d'obtenir un revêtement, après cuisson, homogène à l'épaisseur ciblée.

La fréquence des vibrations varie avantageusement de 10 à 120 Hz, plus avantageusement de 25 à 50 Hz.

L'accélération des vibrations varie avantageusement de 10m/s² à 100 m/s², plus avantageusement de 15 à 50 m/s².

L'amplitude des vibrations varie avantageusement de 0,2 à 15 mm, plus avantageusement de 1 à 8 mm.

Les vibrations peuvent être appliquées par des dispositifs connus et peuvent par exemple être générées par des vibrateurs pneumatiques, électriques ou électromagnétiques....

Les vibrations sont avantageusement appliquées parallèlement au sens d'immersion/émersion de la pièce dans le bain.

Par le procédé selon l'invention, on applique des revêtements uniformes, dont l'épaisseur varie avantageusement de 5 µm à 100 µm, plus avantageusement de 10 µm à 80 µm, encore plus avantageusement de 10 µm à 30 µm.

### Composition de revêtement

L'invention a également pour objet une utilisation d'une composition de revêtement aqueux comprenant de l'eau, un liant tel que défini préalablement, des particules métalliques et des MNFC, dans le cadre du procédé tel que décrit précédemment.

La composition est avantageusement telle que décrite précédemment.

### Revêtement anticorrosion et pièce métallique revêtue

L'invention a également pour objet un procédé d'application d'un revêtement anticorrosion sur des pièces métalliques tel que défini précédemment, caractérisé en ce que la couche de revêtement est ensuite soumise à une opération de cuisson conduite de préférence à une température comprise entre 70°C et 350°C, de préférence à une température comprise entre 180°C et 350°C.

L'opération de cuisson peut être conduite, pendant environ 10 à 60 minutes, par apport d'énergie thermique, telle que par convection ou infra-rouge, ou pendant environ 30 secondes à 5 minutes par induction.

Selon un mode de réalisation avantageux du procédé, préalablement à l'opération de cuisson, les pièces métalliques revêtues sont soumises à une opération de séchage, de préférence à une température comprise entre 60°C et 80°C. L'opération de séchage des pièces métalliques revêtues peut être conduite par apport d'énergie thermique, telle que par convection, infra-rouge ou induction, à une température comprise entre 30 et 250°C, avantageusement entre 60°C et 80°C, en convection ou en infra-rouge pendant 10 à 30 minutes sur ligne ou pendant environ 30 secondes à 5 minutes par induction. Avant le revêtement, il est judicieux dans la plupart des cas d'éliminer la matière étrangère de la surface du substrat, notamment par nettoyage et dégraissage soigneux.

Selon l'invention, le revêtement anticorrosion de pièces métalliques est appliqué sur les pièces métalliques à protéger, avec une épaisseur uniforme avantageusement comprise de 5 µm à 100 µm, plus avantageusement de 10 µm à 80 µm, encore plus avantageusement de 10 µm à 30 µm.

La présente invention s'étend aussi à la pièce métallique, de préférence en acier ou en acier revêtue de zinc ou d'une couche à base de zinc déposée par différents modes d'application incluant le dépôt mécanique, à la fonte et l'aluminium, muni d'un revêtement anti-corrosion selon l'invention appliqué à l'aide des compositions précitées.

La pièce métallique peut être traitée au préalable, par exemple par un traitement au phosphate. Ainsi, la pièce peut être prétraitée pour avoir, par exemple, un revêtement de phosphate de fer selon une quantité de 0,1 à 1 g/m² ou un revêtement de phosphate de zinc selon une quantité de 1,5 à 4 g/m².

Le procédé selon l'invention est particulièrement adapté aux pièces métalliques volumineuses et de forme complexe, telles que par exemple les supports d'amortisseurs, les berceaux moteur, les tubes à essence et d'une manière plus générale, les pièces mécano-soudées.

Cette invention permet, par une technique d'immersion/émersion d'appliquer un revêtement uniforme, à l'épaisseur recherchée, sur des pièces pouvant être volumineuses et de géométries complexes, et de traiter des zones difficiles d'accès tels que les corps creux.

Les technologies d'immersion/émersion en phase aqueuse sont économiquement intéressantes en ce sens qu'elles permettent un rendement voisin de 100%. Par ailleurs les émissions en composés organiques volatils sont faibles.

Les exemples qui suivent permettent d'illustrer l'invention.

### Exemple N°1

Dans l'exemple qui suit, différents agents de rhéologie ont été dispersés dans des bains de composition standard (CStd):
Bain selon l'invention :
   - A : CStd + 0,5% en poids (en matière sèche) de Curran THIX 5000 de la société Cellucomp
Bains - exemples comparatifs :
   - B : CStd + 0,5% en poids (en matière sèche) de gomme de xanthane (Rhodopol 23, fournisseur : Rhodia)
   - C : CStd + 0,7% en poids (en matière sèche) d'épaississant cellulosique conventionnel (CELLOSIZE^{™} QP4400, fournisseur : Dow Chemical)
   - D : CStd + 1% en poids (en matière sèche) d'une argile organophile (Bentone^{®} EW, fournisseur : Elementis Specialties)
   - E : CStd + 0,75% en poids (en matière sèche) d'une polyurée (BYK^{®}420, fournisseur : BYK-Chemie GmbH)

La composition standard de référence correspond à :

| | |
|---|---|
| Eau desionisée | 39.06% |
| DPG | 10,29 |
| Synperonic^{®} 13/6,5 | 3,15% |
| Silquest^{®} A 187 | 8,66 % |
| Zinc* | 32,12 |
| Aluminium** | 5,08 |
| Schwego foam^{®} | 0,4 % |
| Nipar^{®} S10 | 0,71 % |
| Aérosol^{®} TR70 | 0,53 % |

| | |
|---|---|
| *Zinc sous forme d'une pâte à environ 95 % dans le white spirit **Aluminium sous forme d'une pâte à environ 70 % dans le DPG (dipropylène glycol) Synperonic^{®} 13/6,5 : tensioactif Polyoxyethylene (6.5) isotridecanol Silquest^{®} A187 : gamma-glycidoxypropyltrimethoxyysilane Schwego foam^{®}: agent anti-mousse Nipar^{®} S10 : 1-nitropropane Aerosol^{®} TR70 : tensioactif anionique, Sodium Bistridecyl Sulfosuccinate | |

Pour faciliter la lecture, on peut définir ici les conditions de cuisson :
- Pré-séchage : 15mn palier à 70°C convection
- T°cuisson, durée : 25mn palier à 310°C convection

Le tableau 1 suivant montre que, en l'absence de vibrations appliquées à une pièce émergée à 1m/mn :
• Une pièce émergée dans le bain A, puis cuite 25mn à 310°C, ne coule pas, présente une épaisseur moyenne de film sec élevée (62 microns), ne présente pas un aspect uniforme
• Les pièces émergées dans le bain B ou C, puis cuites 25mn à 310°C, présentent de nombreux défauts d'aspect (accumulation de revêtement en bas de plaque, décollement de film après cuisson)
• Une pièce émergée d'un bain D, puis cuite 25mn à 310°C, présente une épaisseur moyenne faible et des défauts d'aspect
• Une pièce émergée d'un bain E, puis cuite 25mn à 310°C présente une épaisseur moyenne faible.

**Tableau 1 : comparaison, en l'absence de vibrations, des films obtenus après cuisson de pièces émergées de bains CStd contenant différents types d'agents épaississants**

| | | | | | | Epaisseur (µm) | | | |
|---|---|---|---|---|---|---|---|---|---|
| Bain | Acc m/s² | vél mm/s | Dépl mm | Fréquence Hz | Coule | Haut | Bas | Moyenne | Observations |
| A | 0 | 0 | 0 | 0 | Non | 62 | 64 | 62 | Aspect non uniforme |
| B | 0 | 0 | 0 | 0 | Oui | 60 | 85 | 72 | Délaminage bas de plaque |
| C | 0 | 0 | 0 | 0 | au f | 35 | 61 | 48 | Délaminage bas de plaque |
| | | | | | Bcp | | | | |
| D | 0 | 0 | 0 | 0 | Oui | 14 | 22 | 18 | Bullage + grains |
| E | 0 | 0 | 0 | 0 | Ou i | 12 | 13 | 12 | ok |

Le tableau 2 suivant montre que, en présence de vibrations appliquées à une pièce émergée, parallèlement au sens d'immersion/émersion de la pièce dans le bain, **seule** la pièce émergée d'un bain CStd + 0,5% (en matière active) de MNFC (bain A), puis cuite 25mn à 310°C, présente un aspect uniforme et une épaisseur moyenne de l'ordre de 33 microns. L'application de vibrations à une pièce émergée dans les autres bains n'influe pas sur l'aspect et l'épaisseur déposée.

**Tableau 2: comparaison, en présence de vibrations d'environ 36Hz (accélération d'environ 18-20m/s², amplitude d'environ 1,2-1,3mm), des films obtenus après cuisson de pièces émergées de bains CStd contenant différents types d'agents épaississants**

| | | | | | | Epaisseur (µm) | | | |
|---|---|---|---|---|---|---|---|---|---|
| Bain | Acc m/s² | vél mm/s | Dépl mm | Fréquence Hz | Coule | Haut | Bas | Moyenne | Observations |
| A | 19,6 | 90,4 | 1,219 | 37 | non | 27 | 39 | 33 | Effet significatif des vibrations |
| B | 19,8 | 92,3 | 1,231 | 37 | oui | 64 | 83 | 73,5 | Bcp de bulles + flake off |
| C | 19,7 | 92,8 | 1,246 | 37 | oui | 46 | 72 | 59 | Bcp de bulles + flake off |
| D | 18,1 | 92,8 | 1,295 | 36 | oui | 13 | 22 | 17,5 | Bcp de bulles + grains |
| E | 18,2 | 88,4 | 1,241 | 36 | oui | 13 | 14 | 13,5 | Ok |

Le tableau 3 suivant montre que, en présence de vibrations appliquées à une pièce émergée, parallèlement au sens d'immersion/émersion de la pièce dans le bain, d'une fréquence ou amplitude plus élevée que dans le tableau 2, **seule** la pièce émergée d'un bain CStd + 0,5% (en matière active) de MNFC (bain A), puis cuite 25mn à 310°C continue d'impacter significativement l'épaisseur du film uniforme déposé (33 microns de moyenne pour une accélération d'environ 18-19m/s² vs 25,5 microns pour une accélération d'environ 29-30m/s²).

**Tableau 3 : comparaison, en présence de vibrations d'environ 43Hz (accélération d'environ 29-30m/s², amplitude d'environ 1,3-1,5mm), des films obtenus après cuisson de pièces émergées de bains de CStd contenant différents types d'agents épaississants**

| | | | | | | Epaisseur (µm) | | | |
|---|---|---|---|---|---|---|---|---|---|
| Famille épaississant | Acc m/s² | vél mm/s | Dépl mm | Fréquence Hz | Coule | Haut | Bas | Moyenne | observations |
| A | 29,4 | 116,3 | 1,368 | 43 | non | 19 | 32 | 25,5 | Effet significatif des vibrations |
| | | | | | | | | | Gros écart bas/haut |
| B | 29,3 | 117.3 | 1,329 | 44 | oui | 63 | 78 | 70,5 | Bcp de bulles + flake off |
| C | 29,3 | 123 | 1,48 | 42 | oui | 46 | 100 | 73 | Bcp de bulles + flake off |
| D | 30,8 | 119 | 1,34 | 44 | ou i | 14 | 18 | 16 | Bcp de bulles + grains |
| E | 30,1 | 113,7 | 1,289 | 44 | oui | 11 | 13 | 12 | Ok |

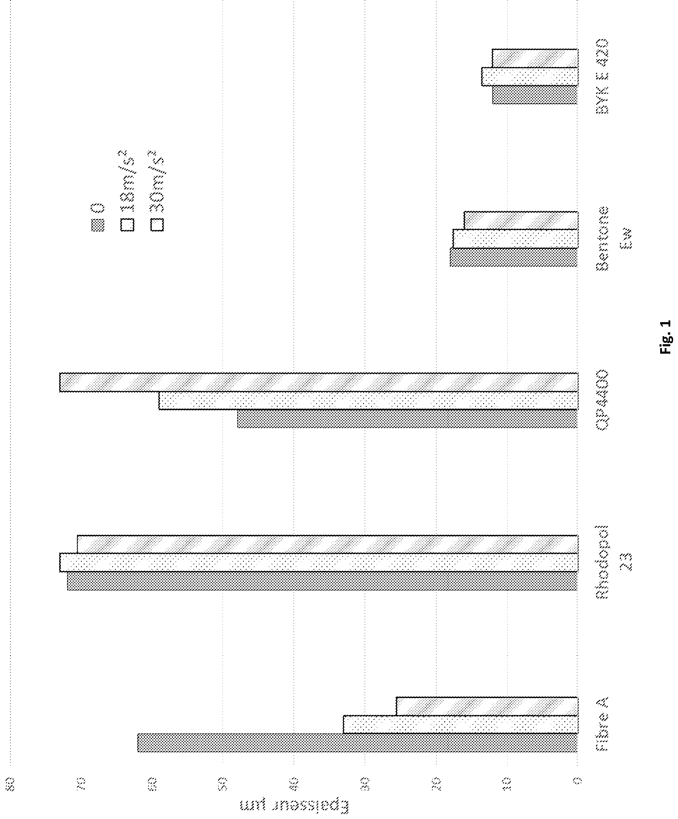

La figure 1 montre que la vibration (mesurable notamment par le biais de sa fréquence ou de son accélération ou encore de son amplitude) imposée à la pièce émergeant du bain A permet d'ajuster l'épaisseur du revêtement uniformément déposé.

Figure 1: Evolution de l'épaisseur déposée en fonction de l'accélération (vibration parallèle) en fonction de la nature de l'agent rhéologique du bain de CStd (de gauche à droite : Fibre A = NMFC, Rhodopol ^{®} 23 = gomme de xanthane, 0P4400^{®} = épaississant cellulosique conventionnel, Bentone^{®} EW = argile organophile , BYK^{®}E 420 = épaississant de la Société BYK de nature polyurée)
Gris : accélération 0 m/s²; points : accélération 18 m/s²; tirets : accélération 30 m/s²

### Exemple N°2

Dans l'exemple qui suit, deux concentrations différentes en MNFC (en matière sèche) ont été dispersées dans du bain CStd :
- CStd + 0,3% en poids (en matière sèche) de MNFC (Exilva^{®} de la société Borregaard
- CStd + 0,5% en poids (en matière sèche) de MNFC (Exilva^{®} de la société Borregaard)

3 pièces ont été immergées puis émergées de chaque bain à une vitesse de 1m/mn. 3 vibrations, parallèlement au sens d'immersion/émersion de la pièce dans le bain, d'accélération différente, ont été imposées à chaque pièce avant cuisson :
- Vibration de 20m/s²
- Vibration de 47m/s²
- Vibration de 85m/s²

Le tableau 4 montre bien, après cuisson, que la combinaison de la concentration en MNFC, dans le bain, et le type de vibration imposée à la pièce émergée, permet d'ajuster l'épaisseur du revêtement déposé.

**Tableau 4 : Influences de la concentration en MNFC et de la vibration sur l'épaisseur déposée**

| | Epaisseur moyenne (microns) | |
|---|---|---|
| Accélération m/s² | 0,3% MNFC | 0,5% MNFC |
| 20 | 31 | 57 |
| 47 | 22 | 31 |
| 85 | 11 | 16 |

### Exemple N°3

Dans l'exemple qui suit, d'autres compositions de bain ont été testées :
▪ Silicate: composition aqueuse (77% en poids d'eau, par rapport au poids total), liant silicate de sodium (23% en poids, par rapport au poids total). Pas de particules métalliques.
▪ Phenoxy : composition aqueuse (69% en poids d'eau, par rapport au poids total), liant Phenoxy, réticulé mélamine (25% en poids, par rapport au poids total), Talc (6% en poids par rapport au poids total). Pas de particules métalliques.
▪ Silane/titanate : composition aqueuse (69% en poids d'eau, par rapport au poids total), 15% de solvants organiques par rapport au poids total, liant silane-titanate (15% en poids, par rapport au poids total, ratio massique silane titane 50 :50), MoO₃ (1% en poids, par rapport au poids total). Pas de particules métalliques.
▪ Silane : composition aqueuse (45% en poids d'eau, par rapport au poids total), liant silane (7% en poids, par rapport au poids total, solvants organiques (18% en poids par rapport au poids total), particules métalliques comprenant du zinc (30% en poids, par rapport au poids total)

On ajoute dans ces bains des MNFC (Exilva^{®} commercialisées par Borregaard) à la concentration exprimée dans le tableau suivant (% en poids sec, par rapport au total des matières sèches).

Les pièces sont immergées dans ces bains à une vitesse d'immersion de 1m/min. Des vibrations sont appliquées, parallèlement au sens d'immersion/émersion de la pièce dans le bain. Les résultats sont donnés dans le tableau suivant :

**Tableau 5**

| | | | Accélération (m/s²) | | | |
|---|---|---|---|---|---|---|
| Type liant | Zn lamellaire? | % MNFC | 0 | 15 | | 70 |
| Silane+Titanate | Non | 1 | 47µm | 62µm | 29µm | 11µm |
| Silicate | Non | 0,6 | 92µm | 63µm | 47µm | 20µm |
| Phenoxy mélamine | Non | 0,6 | 104µm | 98µm | 53µm | 27µm |
| Silane | Oui | 0,50% | >100µm | 33µm | 25µm | 20µm |

Ces résultats démontrent que le même effet est obtenu avec d'autres technologies de liant.

## Revendications

1. Procédé d'application d'un revêtement anticorrosion sur une pièce métallique par immersion/émersion de ladite pièce dans un bain de peinture aqueux, **caractérisé en ce que** le bain de peinture aqueux comprend de l'eau, un liant et des microfibrilles ou nanofibrilles de cellulose (MNFC) et **en ce que**, en sortie du bain, la pièce métallique revêtue est soumise à des vibrations.

2. Procédé selon la revendication 1, **caractérisé en ce que** les MNFC ont une longueur inférieure à 100µm et un diamètre inférieur à 100 nm.

3. Procédé selon la revendication 2, **caractérisé en ce que** les MNFC ont une longueur allant de 1 à 2 µm et un diamètre variant de 20 à 70 nm.

4. Procédé selon la revendication 1, **caractérisé en ce que** les MNFC sont sous la forme de plaquettes d'une dimension moyenne maximale d'au moins 10 microns et d'une dimension moyenne minimale inférieure à 1 micron.

5. Procédé selon l'une quelconque des revendications précédentes, **caractérisé en ce que** le bain de peinture aqueux comprend 0,2 à 8% en poids de microfibrilles de cellulose, par rapport au poids total du bain.

6. Procédé selon l'une quelconque des revendications précédentes, **caractérisé en ce que** le bain comprend 3 à 50% en poids, par rapport au poids total du bain, de liant.

7. Procédé selon l'une quelconque des revendications précédentes, **caractérisé en ce que** le liant est choisi parmi les liants à base de silane, les liants à base de titanate, les liants à base de zirconate, les liants à base de silicate, les liants à base de résines phénoxy en phase aqueuse réticulées.

8. Procédé selon l'une quelconque des revendications précédentes, **caractérisé en ce que** le bain comprend de 30 à 85% en poids, par rapport au poids total du bain, d'eau.

9. Procédé selon l'une quelconque des revendications précédentes, **caractérisé en ce que** le bain comprend de 10 à 40% en poids, par rapport au poids total du bain, de métal particulaire, avantageusement sous forme lamellaire.

10. Procédé selon la revendication 9, **caractérisé en ce que** le métal particulaire est choisi parmi le zinc, l'aluminium, le chrome, le manganèse, le nickel, le titane, leurs alliages et mélanges intermétalliques, ainsi que leurs mélanges.

11. Procédé selon l'une quelconque des revendications précédentes, **caractérisé en ce que** le bain comprend également, un ou plusieurs des composés suivants :
a. 1 à 30% en poids de solvant organique ou d'un mélange de solvants organiques, par rapport au poids total du bain
b. 0,1 à 7% en poids d'oxyde de molybdène, par rapport au poids total du bain
c. 0,5 à 10% en poids, par rapport au poids total du bain, d'un agent renforçateur des propriétés anti-corrosion choisi dans le groupe constitué par l'yttrium, le zirconium, le lanthane, le cérium, le praséodyme, sous la forme d'oxydes ou de sels, avantageusement l'oxyde d'yttrium Y₂O₃,
d. 0,2 à 4 % en poids, par rapport au poids total de la composition, d'un pigment inhibiteur de corrosion tel que le triphosphate d'aluminium
e. un silicate de sodium, de potassium ou de lithium.

12. Procédé selon l'une quelconque des revendications précédentes, **caractérisé en ce que** l'accélération des vibrations varie de 10m/s² à 100 m/s².

13. Utilisation d'une composition de revêtement aqueux comprenant de l'eau, un liant, des particules métalliques et des MNFC, dans le cadre du procédé selon la revendication 1.

14. Procédé selon l'une quelconque des revendications 1 à 12, **caractérisé en ce que** la couche de revêtement est ensuite soumise à une opération de cuisson conduite de préférence à une température comprise entre 70°C et 350°C.

15. Procédé selon la revendication 14, **caractérisé en ce que** préalablement à l'opération de cuisson, les pièces métalliques revêtues sont soumises à une opération de séchage, de préférence à une température comprise entre 60°C et 80°C.

16. Revêtement anticorrosion de pièces métalliques **caractérisé en ce qu'**il est obtenu selon l'une quelconque des revendications 14 à 15 et qu'il est appliqué sur les pièces métalliques à protéger, avec une épaisseur uniforme comprise entre 5 et 100 µm et de préférence entre 10 et 30 µm.

17. Pièce métallique munie d'un revêtement anticorrosion selon la revendication 16.

## Patentansprüche

1. Verfahren zum Aufbringen einer Korrosionsschutzbeschichtung auf ein Metallteil durch Immersion/Emersion des Teils in ein wässriges Farbbad, **dadurch gekennzeichnet, dass** das wässrige Farbbad Wasser, ein Bindemittel und Cellulosemikrofibrillen oder -nanofibrillen (MNFC) umfasst, und dass das beschichtete Metallteil am Ausgang des Bades Vibrationen ausgesetzt wird.

2. Verfahren nach Anspruch 1, **dadurch gekennzeichnet, dass** die MNFC eine Länge kleiner als 100 µm und einen Durchmesser kleiner als 100 nm aufweisen.

3. Verfahren nach Anspruch 2, **dadurch gekennzeichnet, dass** die MNFC eine Länge von 1 bis 2 µm und einen Durchmesser, der von 20 bis 70 nm variiert, aufweisen.

4. Verfahren nach Anspruch 1, **dadurch gekennzeichnet, dass** die MNFC die Form von Plättchen mit einem maximalen mittleren Maß von mindestens 10 µm und einem minimalen mittleren Maß kleiner als 1 µm vorliegen.

5. Verfahren nach einem der vorstehenden Ansprüche, **dadurch gekennzeichnet, dass** das wässrige Farbbad 0,2 bis 8 Gew.-% Cellulosemikrofibrillen bezogen auf das Gesamtgewicht des Bades umfasst.

6. Verfahren nach einem der vorstehenden Ansprüche, **dadurch gekennzeichnet, dass** das Bad 3 bis 50 Gew.-% Bindemittel bezogen auf das Gesamtgewicht des Bades umfasst.

7. Verfahren nach einem der vorstehenden Ansprüche, **dadurch gekennzeichnet, dass** das Bindemittel aus den Bindemitteln auf Silanbasis, den Bindemitteln auf Titanatbasis, den Bindemitteln auf Zirkonatbasis, den Bindemitteln auf Silikatbasis, den Bindemitteln auf Basis vernetzter Phenoxyharze in wässriger Phase ausgewählt wird.

8. Verfahren nach einem der vorstehenden Ansprüche, **dadurch gekennzeichnet, dass** das Bad 30 bis 85 Gew.-% Wasser bezogen auf das Gesamtgewicht des Bades umfasst.

9. Verfahren nach einem der vorstehenden Ansprüche, **dadurch gekennzeichnet, dass** das Bad 10 bis 40 Gew.-% teilchenförmiges Metall, vorteilhafterweise in lamellarer Form, bezogen auf das Gesamtgewicht des Bades umfasst.

10. Verfahren nach Anspruch 9, **dadurch gekennzeichnet, dass** das teilchenförmige Metall aus Zink, Aluminium, Chrom, Mangan, Nickel, Titan, ihren Legierungen und intermetallischen Mischungen sowie deren Mischungen ausgewählt ist.

11. Verfahren nach einem der vorstehenden Ansprüche, **dadurch gekennzeichnet,**
**dass** das Bad auch eine oder mehrere der folgenden Verbindungen umfasst:
a. 1 bis 30 Gew.-% organisches Lösungsmittel oder eine Mischung aus organischen Lösungsmitteln bezogen auf das Gesamtgewicht des Bades
b. 0,1 bis 7 Gew.-% Molybdänoxid bezogen auf das Gesamtgewicht des Bades
c. 0,5 bis 10 % Gew.-% bezogen auf das Gesamtgewicht des Bades, eines Verstärkungsmittels der Korrosionsschutzeigenschaften, das aus der Gruppe ausgewählt ist, die aus Yttrium, Zirkonium, Lanthan, Cer, Praseodym, in Form von Oxiden oder Salzen, vorteilhafterweise Yttriumoxid Y₂O₃, besteht,
d. 0,2 bis 4 Gew.-% bezogen auf das Gesamtgewicht der Zusammensetzung, eines korrosionshemmenden Pigments, wie Aluminiumtriphosphat
e. ein Natrium-, Kalium- oder Lithiumsilikat.

12. Verfahren nach einem der vorstehenden Ansprüche, **dadurch gekennzeichnet, dass** die Beschleunigung der Vibrationen von 10 m/s² bis 100 m/s² variiert.

13. Verwendung einer wässrigen Beschichtungszusammensetzung, die Wasser, ein Bindemittel, metallische Teilchen und MNFC umfasst, im Rahmen des Verfahrens nach Anspruch 1.

14. Verfahren nach einem der Ansprüche 1 bis 12, **dadurch gekennzeichnet, dass** die Beschichtungsschicht anschließend einem Brennvorgang bevorzugt bei einer Temperatur zwischen 70 °C und 350 °C unterzogen wird.

15. Verfahren nach Anspruch 14, **dadurch gekennzeichnet, dass** die beschichteten Metallteile vor dem Brennvorgang einem Trocknungsvorgang unterzogen werden, bevorzugt bei einer Temperatur zwischen 60 °C und 80 °C.

16. Korrosionsschutzbeschichtung von Metallteilen, **dadurch gekennzeichnet, dass** sie nach einem der Ansprüche 14 bis 15 erhalten wird, und dass sie auf die zu schützenden Metallteile mit einer gleichförmigen Dicke zwischen 5 und 100 µm und bevorzugt zwischen 10 und 30 µm aufgebracht ist.

17. Metallteil, das mit einer Korrosionsschutzbeschichtung nach Anspruch 16 versehen ist.

## Claims

1. Method for applying a corrosion-resistant coating to a metal part by immersing/withdrawing said part in/from an aqueous paint bath, **characterised in that** the aqueous paint bath includes water, a binder and cellulose microfibrils or nanofibrils (CMNFs), and the coated metal part is subjected to vibrations when removed from the bath.

2. Method according to claim 1, **characterised in that** the CMNFs have a length less than 100 µm and a diameter less than 100 nm.

3. Method according to claim 2, **characterised in that** the CMNFs have a length ranging from 1 to 2 µm and a diameter varying from 20 to 70 nm.

4. Method according to claim 1, **characterised in that** the CMNFs are in a tile-form of a maximum average dimension of at least 10 microns and a minimum average dimension less than 1 micron.

5. Method according to any one of preceding claims, **characterised in that** the aqueous paint bath includes 0.2 to 8% by weight, compared to the total weight of the bath, of cellulose microfibrils.

6. Method according to any one of preceding claims, **characterised in that** the bath includes 3 to 50% by weight, compared to the total weight of the bath, of binder.

7. Method according to any one of preceding claims, **characterised in that** the binder is selected from binders based on silane, binders based on titanate, binders based on zirconate, binders based on silicate, binders based on cross-linked phenoxy resins in aqueous phase.

8. Method according to any one of preceding claims, **characterised in that** the bath includes from 30 to 85% by weight, compared to the total weight of the bath, of water.

9. Method according to any one of preceding claims, **characterised in that** the bath includes from 10 to 40% by weight, compared to the total weight of the bath, of particulate metal, advantageously in lamellar form.

10. Method according to claim 9, **characterised in that** the particulate metal is selected from zinc, aluminium, chromium, manganese, nickel, titanium, alloys and intermetallic mixtures thereof, and mixtures thereof.

11. Method according to any one of preceding claims, **characterised in that** the bath also includes one or more of the following compounds:
a. 1 to 30% by weight of organic solvent or a mixture of organic solvents, compared to the total weight of the bath,
b. 0.1 to 7% by weight of molybdenum oxide, compared to the total weight of the bath,
c. 0.5 to 10% by weight, compared to the total weight of the bath, of a corrosion-resistance performance enhancer selected from the group constituted of yttrium, zirconium, lanthanum, cerium, praseodymium, in the form of oxides or salts, advantageously yttrium oxide Y₂O₃,
d. 0.2 to 4% by weight, compared to the total weight of the composition, of a corrosion inhibiting pigment such as aluminium triphosphate,
e. A silicate of sodium, potassium or lithium.

12. Method according to any one of preceding claims, **characterised in that** the acceleration of the vibrations varies from 10 m/s² to 100 m/s².

13. Use of an aqueous coating composition including water, a binder, metal particles and CMNFs as a part of the method according to claim 1.

14. Method according to any one of claims 1 to 12, **characterised in that** the coating layer is subsequently subjected to a curing operation preferably carried out at a temperature of between 70° C. and 350° C.

15. Method according to claim 14, **characterised in that** prior to the curing operation, the coated metal parts are subjected to a drying operation, preferably at a temperature of between 60° C and 80° C.

16. Corrosion-resistant coating for metal parts, **characterised in that** it is obtained by the method according to any one of claims 14 to 15 and it is applied to the metal parts to protect, with a uniform thickness of between 5 and 100 µm and preferably between 10 µm to 30 µm.

17. Metal part provided with a corrosion-resistant coating according to claim 16.
